# EUROPEAN PATENT APPLICATION

(11) **EP 3 782 940 A1**
(43) Date of publication of application: **24.02.2021**
(21) Application number: 18915051.9
(22) Date of filing: 20.04.2018
(51) Int. Cl.: B65G 47/28, B65G 33/04, G01N 21/90

(54) **INSPECTION SYSTEM**

(71) Applicant: Azbil Corporation, Chiyoda-ku Tokyo 100-6419 (JP)
(72) Inventor: BEPPU, Hisashi, Tokyo 100-6419 (JP); TOCHIGI, Hidenobu, Tokyo 100-6419 (JP); GOMEZ GARCIA, Xavier, 08227 Terrassa, Barcelona (ES)
(74) Representative: Lavoix
(86) International application number: PCT/JP2018/016272
(87) International publication number: WO 2019/202727

(57) **Abstract**

This inspection system is provided with: a conveyor 10 which conveys a plurality of articles 5; a feed screw 20 which is disposed along the conveyor 10 and which sets the interval between the plurality of articles 5 to be greater than or equal to a predetermined interval; and an inspection device 30 which inspects each of the plurality of articles 5 spaced apart from each other at a constant interval by the feed screw 20.

## Description

### Technical Field

The present invention relates to an inspection system.

### Background Art

For example, when manufacturing pharmaceutical products or food products, such pharmaceutical products and food products may be freeze dried. Before the freeze dry process, the pharmaceutical products or the food products are stored in containers such as vials. The containers in which contents such as the pharmaceutical products or the food products are put are halfway closed by caps and are placed in a freeze dry furnace. When a freeze dry process is completed, the containers are completely closed by caps in the freeze dry furnace, and air in the containers are isolated from outside of the containers. Accordingly, cleanness in the containers is ensured. After the containers have been closed by caps, the containers are transported out of the freeze dry furnace and are sent to the next process.

Typically, in the freeze dry furnace, a number of containers are arranged in an arrayed pattern. Therefore, if temperature distribution and pressure distribution in the freeze dry furnace are uneven, processing conditions for contents of the containers vary due to an arrangement in the freeze dry furnace, so that a quality of the contents after the process may vary. Therefore, there is a case where some containers containing a temperature sensor, a pressure sensor, or the like instead of the contents such as pharmaceutical products or food products are placed in the freeze dry furnace together with the containers containing such contents to monitor a temperature or a pressure during the freeze dry process. The containers thus containing the sensors or the like other than the contents are made recognizable by, for example, differentiating the color of the caps from a normal color.

Before the freeze dry process, the containers are inspected in terms of the presence or absence of the caps, positions of the caps closed halfway, an amount of the contents, and the like. For example, containers without a cap, containers with a half-closed cap at an inadequate position, and containers having an inadequate amount of content are eliminated so as not to proceed to the freeze dry process. After the freeze dry, the containers are inspected in terms of the presence or absence of the caps, the positions of the closed caps, the colors of the caps, the state of freeze dried cake, and so on. For example, containers without a cap, containers with a closed cap at an inadequate position, containers indicating that a sensor is placed therein for monitoring by the color of the cap, containers containing the freeze dried cake in a state which does not meet a standard are eliminated from a manufacture line so as not to proceed a next process. Such inspection may be effected by human, and by an inspection device (for example, see Patent Literatures 1 and 2).

### Citation List

### Patent Literature

PTL 1: CN105445281A
PTL 2: U.S. Patent No. 5392928

### Summary of Invention

### Technical Problem

Aiming at shortening of time required for manufacturing products and automation of a manufacturing process, as well as improvement of accuracy of the inspection and reliability of the inspection, it is desired to automate an inspection process. However, in the inspection devices of the related art, a complex and large-scale mechanism using a star-wheel, which is expensive, is employed. In addition, not only for a freeze dry process for pharmaceutical products or food products, a device capable of inspecting each of a plurality of products accurately is required. Accordingly, it is an object of the present invention to provide an inspection system capable of inspecting each of a plurality of articles accurately with a non-complex structure.

### Solution to Problem

According to an aspect of the invention, there is provided an inspection system including: a conveyor configured to transport a plurality of articles; an auger disposed along the conveyor and configured to set intervals of the plurality of articles on the conveyor at least at predetermined intervals; and an inspection device configured to inspect each of the plurality of articles arranged at regular intervals by the auger.

In the inspection system described above, the inspection device may be disposed so as to oppose the auger.

In the inspection system described above, the inspection device may include a camera.

In the inspection system described above, the inspection device may include a sensor configured to detect the presence or absence of each of the plurality of articles.

In the inspection system described above, a sensor may be disposed at an identical position to a camera in a direction of transport of the articles.

In the inspection system described above, the camera may image the article when the sensor detects the article.

In the inspection system described above, the inspection device may include a light source configured to irradiate the article with an inspection light, and a light detector configured to detect an inspection light passing through the article or an inspection light reflected from the article.

In the inspection system described above, the auger may be able to feed the plurality of articles at a speed different from the transport speed of the conveyor.

The inspection system described above may further include a sorting device configured to sort each of the plurality of articles released from the auger.

In the inspection system described above, the transport speed of the conveyor may be closed-loop controlled.

The inspection system described above may further include a guide configured to guide the plurality of articles fed by the conveyor so as to come into contact with the auger.

In the inspection system described above, the guide may bring the plurality of articles into contact with the auger from an oblique direction.

In the inspection system described above, the articles may be vials.

### Advantageous Effect of Invention

According to the present invention, an inspection system capable of inspecting each of a plurality of articles accurately with a non-complex structure.

### Brief Description of Drawings

[Fig. 1] Fig. 1 is a schematic top view of an inspection system according to an embodiment.
[Fig. 2] Fig. 2 is a schematic front view of the inspection system according to the embodiment.

### Description of Embodiments

An embodiment of the present invention will be described below. In the drawings, the same or similar parts are designated by the same or similar reference signs. However, the drawings are schematic illustrations. Therefore, specific dimensions or the like are to be determined based on the following description. In addition, the drawings may include parts having different dimensional relationships and ratios from each other as a matter of course.

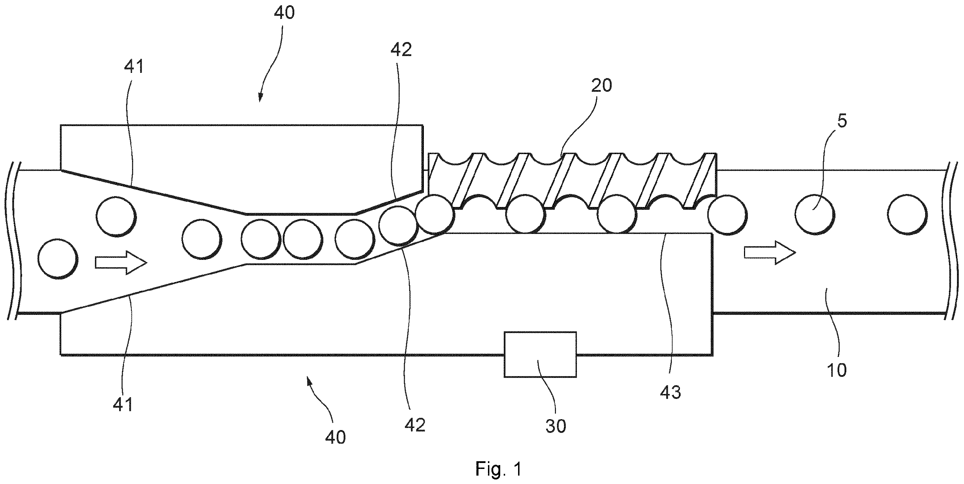

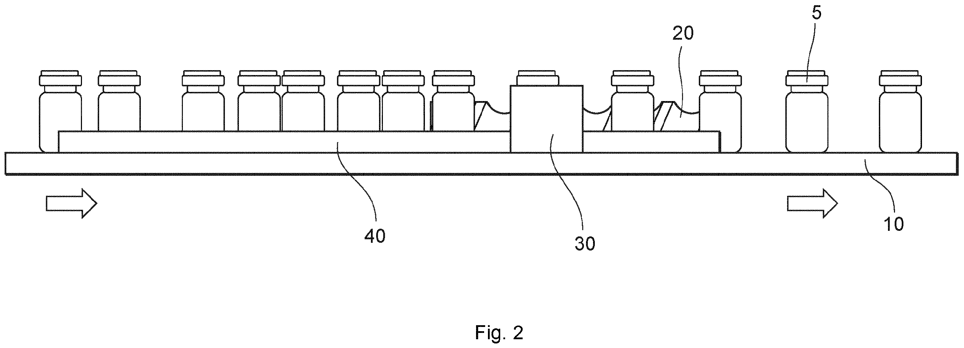

An inspection system according to an embodiment includes; as illustrated in Fig. 1 and Fig. 2, a conveyor 10 configured to transport a plurality of articles 5; an auger 20 disposed along the conveyor 10 and configured to set intervals of the plurality of articles 5 on the conveyor 10 at least at predetermined intervals, and an inspection device 30 configured to inspect each of the plurality of articles 5 arranged at regular intervals by the auger 20.

The inspection system according to the embodiment is disposed, for example, in a clean room, but not limited thereto. Each of the plurality of articles 5 is, but not specifically limited to, a container such as a vial that stores pharmaceutical products to be subject, for example, to treatment such as freeze dry or pharmaceutical products that have already subjected to the treatment such as freeze dry. Each of the plurality of articles 5 includes, for example, a cylindrical shape. The conveyor 10 moves, for example, at a constant transport speed. The conveyor 10 is driven, for example, by a servo motor. Movement of the conveyor 10 is detected by an encoder, and the servo motor is closed loop controlled so as to make the transport speed constant.

The auger 20 is disposed, for example, so that a direction of longitudinal axis thereof extends in a direction parallel to a direction of travel of the conveyor 10. The auger 20 may be disposed on the conveyor 10. The auger 20 is rotated by a drive unit such as a motor. The pitch of the auger 20 is equal to, or slightly longer than the diameter of each of the plurality of articles 5. However, a valley of the auger 20 is set not to accommodate two of the articles 5.

When the articles 5 are brought into contact with a side surface of the auger 20, one article 5 is received in one valley pitch of the auger 20. The article 5 that have entered the valley of the auger 20 moves in the direction of the longitudinal axis of the auger 20 in association with the rotation of the auger 20. Since one valley pitch of the auger 20 can accommodate one article 5, intervals of the plurality of articles 5 become greater than the predetermined intervals. For example, when the intervals of the plurality of articles 5 become a value obtained by subtracting the diameter of the article 5 from a pitch of the auger 20. The pitch of the auger 20 may be set so that one article 5 can be accommodated within a range of inspection such as a visual field size of the inspection device 30.

The speed at which the auger 20 feeds the articles 5 is determined by a rotation speed of the auger 20. When considering a situation in which the article 5 may fall over due to acceleration or deceleration applied when the article 5 is received in the valley of the auger 20, and when the article 5 is released from the valley of the auger 20, it is desirable that the speed at which the auger 20 feeds the article 5 is equal to the transport speed of the conveyor 10. However, if bottom surfaces of the articles 5 can slide against the conveyor 10, the speed at which the auger 20 feeds the articles 5 may be different from the transport speed of the conveyor 10. For example, a sorting device may be installed at a position downstream of the inspection device 30 to configure such that the articles 5, which are determined not to meet the predetermined standard by the inspection device 30, or the articles 5, having colored caps which indicate that a temperature sensor or a pressure sensor is set therein, are let down from the conveyor 10 or sent to a different transport path. At this time, the speed at which the auger 20 feeds the articles 5 is reduced to a speed lower than the transport speed of the conveyor 10 or even to zero to stop, so that the articles 5 held by the auger 20 are released after having waited for passage of the articles 5 positioned downstream of the articles 5 held by the auger 20 through the sorting device . Consequently, the sorting device can easily let the articles 5 down from the conveyor 10 or feed the same to a different transport path. As long as the sorting device can operate at a sufficient speed, the speed at which the auger 20 feeds the articles 5 may be equal to the transport speed of the conveyor 10 or may be faster than the transport speed of the conveyor 10.

The inspection system according to the embodiment further includes guides 40 configured to guide the plurality of articles 5 transported by the conveyor 10 so as to come into contact with the auger 20. The guides 40 each include an aligning part 41 for aligning the articles 5 spread transversally with respect to the direction of travel of the conveyor 10 to one row. The spacing of the guides 40 is narrowed in the aligning parts 41 from substantially the same length as the width of the conveyor 10 to a length that does not allow two or more articles 5 to be accommodated but allows only one article 5 in a width direction. Therefore, even when the plurality of articles 5 transported by the conveyor 10 are spread transversally, the articles 5 come into contact with an edge of the aligning parts 41 of the guides 40 and are aligned into one row.

The guides 40 each include a contact guiding part 42 that brings the articles 5 aligned in one row into contact with the auger 20 from an oblique direction. The articles 5 transported by the conveyor 10 are guided to the valley of the auger 20 from the oblique direction while being in contact with the contact guiding parts 42. By guiding the articles 5 to the auger 20 from the oblique direction, easy entry of the articles 5 into the valley of the auger 20 is achieved even when a rotating speed of the auger 20 is high. Therefore, such events that the articles 5 fall over or the fallen articles 5 are caught between the conveyor 10 and the auger 20 may be inhibited. In addition, a pressure applied by the guides 40 to the article 5 and required when the articles 5 enter the valley of the auger 20 may be lowered.

The guide 40 has an opposing part 43 which opposes the auger 20. A space between the auger 20 and the opposing part 43 of the guide 40 is set to allow one row of the articles 5 to move and not to allow two or more rows of the articles 5 to be arranged. The opposing part 43 of the guide 40 inhibits the articles 5 from being released from the auger 20 in the middle of the auger 20. The plurality of articles 5 released from the auger 20 at a trailing end of the auger 20 are transported by the conveyor 10 while maintaining the intervals . When the articles 5 are released from the auger 20 at the trailing end of the auger 20, the articles 5 is prevented from sliding or falling over by the opposing part 43 of the guide 40.

The inspection device 30 is disposed so as to oppose the auger 20. Since the intervals of the articles 5 are secured by the auger 20, such events that two or more articles 5 are overlapped or that adjacent articles 5 come close in an inspection area of the inspection device 30 are avoided. In addition, the articles 5, being interposed between the auger 20 and the guides 40, can hardly be fallen over in the inspection area of the inspection device 30. Therefore, the inspection device 30 is capable of reliably inspecting individual articles 5.

When the articles 5 are vials containing a pharmaceutical product before being freeze dried, the inspection device 30 inspects the presence or absence of the caps of the vials, the positions of the caps half-closing the vials, the amount of liquid-state pharmaceutical product in the vials, and the like. The inspection device 30 may determine vials that do not meet a predetermined standard, such as vials having no cap, vials having a halfway closed cap not at a predetermined position, and vials not containing a predetermined amount of liquid-state pharmaceutical product, to be eliminated before proceeding to the freeze dry process.

When the articles 5 are vials containing a pharmaceutical product after being having freeze dried, the inspection device 30 inspects the presence or absence of the caps of the vials, the positions of the caps closing the vials, the color of the caps, the state of the freeze dried cake in the vials, and the like. The inspection device 30 may determine vials that do not meet a predetermined standard, such as vials having no cap, vials having a closed cap not at a predetermined position, vials not having caps of a predetermined color, and vials containing the freeze dried cake which does not meet a predetermined standard, to be eliminated before proceeding to the next process.

The inspection device 30 may include a camera for imaging each of the plurality of articles 5 and a sensor for detecting the presence or absence of each of the plurality of articles. The sensor may be integrated into the camera and may be disposed in front of the camera. The sensor is disposed at an identical position to the camera in the direction of transport of the article 5. When the sensor detects that the article 5 comes to the front of the camera, the camera images the article 5 present in front of the camera. If the sensor and the camera are positioned apart from each other, estimation of time required for the article detected by the sensor to reach the front of the camera is required. In addition, when the time falls short of expectations, the camera may fail to image the article adequately. In contrast, by making the sensor detect the article that reaches the front of the camera, the camera can image the article 5 at a timing when the sensor detects the article 5.

The inspection device 30 may include a light source configured to irradiate each of the plurality of articles 5 with an inspection light such as a laser light, and a light detector configured to detect an inspection light transmitted through each of the plurality of articles 5 or reflecting from each of the plurality of articles 5. The light detector may include an array of a plurality of light detection elements. Examples of the light detection elements that can be used include a photoelectric conversion element such as a photodiode. Inspection of the state of the articles 5 is achieved by measuring a transmissivity and reflectivity of the inspection light through or from the articles 5.

As described above, the inspection system according to the embodiment may further include a sorting device configured to sort each of the plurality of the articles 5 on the conveyor 10 released from the auger 20. For example, the sorting device may push the articles 5 determined not to meet a predetermined standard by the inspection device 30 down from the conveyor 10 or may feed the same to a different transport path. Alternatively, the sorting device may sample the articles 5 which are determined that a further inspection by the inspection device 30 is necessary. For example, when the transport speed of the conveyor 10 is closed loop controlled, time required for the articles 5 on the conveyor 10 released from the auger 20 to reach the sorting device can be accurately estimated.

The inspection system according to the embodiment described thus far is capable of inspecting each of the plurality of articles 5 accurately with a non-complex structure. In addition, Inverting the direction of travel of the conveyor 10 is achieved only by replacing the guides 40 and reversing the direction of rotation of the auger 20.

### (Other Embodiments)

Although the present invention has been described based on the embodiments as described above, description and drawings which constitute part of this disclosure should not be interpreted to limit the present invention. From this disclosure, various alternative embodiments, examples, and operational technologies will become apparent for those skilled in the art. For example, the articles are not limited to vials containing the pharmaceutical products but may be containers containing food products or beverages. Alternatively, the articles may be precise parts or the like. In this manner, the articles include any articles that can be fed by the auger. Further, it is a matter of course that the articles are not limited to articles to be subject to the freeze dry process. In this manner, it should be understood that the present invention includes various embodiments which are not described in this specification.

### Reference Signs List

5...article, 10...conveyor, 20...auger, 30...inspection device, 40...guide, 41...aligning part, 42...contact guiding part, 43...opposing part

## Claims

1. An inspection system comprising:
a conveyor configured to transport a plurality of articles;
an auger disposed along the conveyor and configured to set distances of the plurality of articles at least at predetermined intervals; and
an inspection device configured to inspect each of the plurality of articles arranged at regular intervals by the auger.

2. The inspection system according to Claim 1, wherein the inspection device is disposed so as to oppose the auger.

3. The inspection system according to Claim 1 or 2, wherein the inspection device includes a camera.

4. The inspection system according to Claim 3, wherein the inspection device includes a sensor for detecting presence or absence of each of the plurality of articles.

5. The inspection system according to Claim 4, wherein the sensor is disposed at an identical position to the camera in a direction of transport of the articles.

6. The inspection system according to Claim 4 or 5, wherein when the sensor detects the article, the camera images the article.

7. The inspection system according to Claim 1 or 2, wherein the inspection device includes a light source configured to irradiate the articles with an inspection light, and a light detector configured to detect an inspection light transmitted through the articles or an inspection light reflected from the articles.

8. The inspection system according to Claim 1, further comprising a sorting device configured to sort each of the plurality of articles released from the auger.

9. The inspection system according to any one of Claims 1 to 8, further comprising a guide configured to guide the plurality of articles so as to come into contact with the auger.

10. The inspection system according to Claim 9, wherein the guide brings the plurality of articles into contact with the auger from an oblique direction.

## Amended claims

### Amended claims under Art. 19.1 PCT

1. (After Amendment) An inspection system comprising:
a conveyor configured to transport a plurality of articles;
an auger disposed in parallel to the conveyor and configured to set intervals of the plurality of articles on the conveyor at least at predetermined intervals; and
an inspection device configured to inspect each of the plurality of articles arranged at regular intervals by the auger,
the inspection system further comprising:
a guide configured to guide the plurality of articles on the conveyor so as to come into contact with the auger,
wherein the guide brings the plurality of articles on the conveyor into contact with the auger from an oblique direction.

2. The inspection system according to Claim 1, wherein the inspection device is disposed so as to oppose the auger.

3. The inspection system according to Claim 1 or 2, wherein the inspection device includes a camera.

4. The inspection system according to Claim 3, wherein the inspection device includes a sensor for detecting presence or absence of each of the plurality of articles.

5. The inspection system according to Claim 4, wherein the sensor is disposed at an identical position to the camera in a direction of transport of the articles.

6. The inspection system according to Claim 4 or 5, wherein, when the sensor detects the article, the camera images the article.

7. The inspection system according to Claim 1 or 2, wherein the inspection device includes a light source configured to irradiate the articles with an inspection light, and a light detector configured to detect an inspection light transmitted through the articles or an inspection light reflected from the articles.

8. The inspection system according to Claim 1, further comprising a sorting device configured to sort each of the plurality of the articles released from the auger.

9. (deleted)

10. (deleted)
